(19) Europäisches Patentamt
European Patent Office
Office européen des brevets

(11) **EP 4 160 159 B1**

(12) **EUROPÄISCHE PATENTSCHRIFT**

(45) Veröffentlichungstag und Bekanntmachung des Hinweises auf die Patenterteilung:
**24.07.2024  Patentblatt 2024/30**

(21) Anmeldenummer: **21200351.1**

(22) Anmeldetag: **30.09.2021**

(51) Internationale Patentklassifikation (IPC):
**G01F 1/716** $^{(2006.01)}$

(52) Gemeinsame Patentklassifikation (CPC):
**G01F 1/716**

(54) **VERFAHREN UND DURCHFLUSSMESSGERÄT ZUM ERFASSEN EINER DURCHFLUSSZEIT EINES FLUIDS**

METHOD AND FLOW METER FOR DETECTING THE FLOW TIME OF A FLUID

PROCÉDÉ ET DÉBITMÈTRE PERMETTANT DE DÉTECTER LE TEMPS DE PASSAGE D'UN FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.04.2023  Patentblatt 2023/14**

(73) Patentinhaber: **Fraunhofer-Gesellschaft zur Förderung der angewandten Forschung e.V.**
**80686 München (DE)**

(72) Erfinder:
• **SCHMIEDER, Leonhard**
  **79110 Freiburg (DE)**
• **KOSS, Peter**
  **79110 Freiburg (DE)**
• **KÜHNEMANN, Frank**
  **79110 Freiburg (DE)**

(74) Vertreter: **WSL Patentanwälte Partnerschaft mbB**
**Kaiser-Friedrich-Ring 98**
**65185 Wiesbaden (DE)**

(56) Entgegenhaltungen:
| | |
|---|---|
| EP-A2- 0 710 849 | WO-A1-2011/154176 |
| WO-A1-2015/090926 | WO-A1-2020/126867 |
| WO-A2-2012/034874 | DE-A1- 4 125 309 |
| RU-C1- 2 141 628 | US-A1- 2011 001 474 |
| US-A1- 2019 368 906 | |

EP 4 160 159 B1

**Beschreibung**

Die vorliegende Erfindung betrifft ein Verfahren sowie ein Durchflussmessgerät zum Erfassen einer Durchflusszeit, die ein Fluid zum Durchfließen einer Messstrecke von einem Manipulationsort zu einem von dem Manipulationsort in einer Flussrichtung des Fluids beabstandeten Detektionsort benötigt.

Um den Volumenstrom eines Fluids durch eine Fluidführung, insbesondere eine Leitung oder ein Rohr, zu bestimmen, ist es zumeist ausreichend, die Durchflusszeit des Fluids, welche dieses zum Durchfließen einer Messstrecke zwischen zwei beabstandeten Orten der Fluidführung benötigt, zu erfassen. Zur Volumenstrommessung sind aus dem Stand der Technik vielfältige Messverfahren bekannt. Darunter auch Verfahren, welche die Kernspin- oder Elektronenspineigenschaften des Fluids mithilfe von Methoden der Kernspin- oder Elektronenspinresonanz nutzen. Letztere beruhen in der Regel auf Relaxationsprozessen und verlangen einen komplexen apparativen Aufbau, so wie er mit den Methoden der Kernspinresonanzmessungen einhergeht.

Die US 2019/368906 A1 offenbart Systeme und Verfahren zur Bestimmung der Durchflussrate von Flüssigkeiten mit magnetisierbaren Komponenten. Ein solches Durchflussmessgerät enthält eine Magnetisierungseinheit, die Anteile magnetisierbarer Komponenten im Fluid magnetisiert; einen Magnetfelddetektor mit einer Sonde zum Erfassen des mit den magnetisierten Anteilen des Fluids verbundenen Magnetfelds; und eine Verarbeitungsschaltung zum Bestimmen der Geschwindigkeit des Fluids aus der Zeit, die die magnetisierten Anteile für den Weg von der Magnetisierungseinheit zum Magnetfelddetektor benötigen, und dem Abstand zwischen der Magnetisierungseinheit und dem Magnetfelddetektor. Die Durchflussrate des Fluids wird dann anschließend aus der Geschwindigkeit und der Querschnittsfläche der Leitung des Durchflussmessgeräts bestimmt.

Die WO 2011/154176 A1 offenbart ein Verfahren und eine Vorrichtung zur Bestimmung der Strömungsgeschwindigkeit magnetischer oder ferromagnetischer Partikel in einer Kontrollräume durchströmenden Suspension. Mittels einer einen ersten Kontrollraum umgebenden Messspule wird der magnetische Fluss F1 abhängig von der Zeit t gemessen, wobei der magnetische Fluss zu einem Zeitpunkt ein Maß für die Menge der in der Suspension enthaltenen magnetischen Partikel darstellt.

In einem vorbestimmten Abstand d vom ersten Kontrollraum, in einem zweiten Kontrollraum wird mittels einer den zweiten Kontrollraum umgebenden zweiten Messspule der magnetische Fluss F2 abhängig von der Zeit t gemessen, und ein Vergleich der Messungen F1 (t) und F2 (t) ergibt einen zeitlichen Abstand Dt, welcher unter Verwendung des vorbestimmten Abstands d zur Ermittlung der Strömungsgeschwindigkeit verwendet wird.

Die RU 2141628 C1 offenbart ein Durchflussmessgerät, das für die Messung der Durchflussmenge von chemisch aktiven Flüssigkeiten in großen Mengen bestimmt ist. Das Durchflussmessgerät hat eine Messstrecke in Form einer keramischen Rohrleitung mit großem Durchmesser, in der Polarisator- und Analysatormagnete, Modulations- und Aufnahmespulen für das Signal des Durchflussmessers sowie ein Detektor und eine Datenverarbeitungs- und Anzeigevorrichtung angeordnet sind.

Die DE 41 25 309 A1 ein Verfahren zum Messen der Strömung von bewegten Spins mit einem NMR-System, wobei das Verfahren die Schritte aufweist: Ausführen eines ersten NMR-Messzyklus, in welchem die Magnetfeldgradienten, die durch das NMR-System erzeugt werden, ein erstes Referenzmoment haben und ein NMR-Referenzsignal S 1 erzeugt wird; Ausführen eines zweiten NMR-Messzyklus, in welchem die Magnetfeldgradienten, die durch das NMR-System erzeugt werden, einen Moment haben, das sich von dem ersten Referenzmoment um eine inkrementelle Größe DM 1 unterscheidet, und ein NMR-Signal S 2 erzeugt wird; Ausführen eines dritten NMR-Messzyklus, in welchem die Magnetfeldgradienten, die durch das NMR-System erzeugt werden, ein erstes Moment haben, das sich von dem ersten Referenzmoment um eine inkrementelle Größe DM 1 unterscheidet, und ein NMR-Signal S 3 erzeugt wird; Berechnen eines ersten Differenzwertes D 1 zwischen einem aus S 1 gewonnenen Signal und einem aus S 2 gewonnenen Signal; Berechnen eines zweiten Differenzwertes D 2 zwischen einem aus S 1 gewonnenen Signal und einem aus S 3 gewonnenen Signal; und Berechnen der Strömung der bewegten Spins unter Verwendung der beiden Differenzwerte D 1 und D 2 .

Die WO 2012/034874 A2 offenbart ein Verfahren und eine Vorrichtung sowie deren Verwendung zur Bestimmung der Strömungsgeschwindigkeit ferromagnetischer Partikel in einer Suspension. Die Suspension durchströmt wenigstens zwei voneinander getrennte Volumenbereiche, wobei ein erster Volumenbereich entlang einer Strömungsrichtung der Suspension in einem vorbestimmten Abstand d vor einem zweiten Volumenbereich angeordnet wird. Der erste Volumenbereich wird von einer Geberspule umgeben, welche ein magnetisches Feld erzeugt, und der zweite Volumenbereich wird von einer Empfangsspule umgeben, durch welche ein Signal gemessen wird. Im magnetischen Feld der Geberspule werden die magnetischen Partikel in einer Vorzugsrichtung ausgerichtet und magnetische Partikel mit Vorzugsrichtung erzeugen in der Empfangsspule mit einem zeitlichen Abstand At das Signal. Der zeitliche Abstand At wird unter Verwendung des vorbestimmten Abstands d zur Ermittlung der Strömungsgeschwindigkeit verwendet.

Die US 2011/001474 A1 offenbart Verfahren und Vorrichtungen zur Gewinnung von NMR-Signalen aus eine strömende Flüssigkeit umfassende Permanentmagnetanordnungen zur Erzeugung von Magnetfeldern für NMR-Anwendungen und -instrumente, einschließlich einer Durchflussmessung.

Demgegenüber liegt der vorliegenden Erfindung die Aufgabe zugrunde, eine Durchflussmessung auf Grundlage der Kernspin- oder Elektronenspineigenschaften eines Fluids mit einem verringerten apparativen Aufwand bereitzustellen.

Die zuvor genannte Aufgabe wird durch ein Verfahren gemäß dem beigefügten unabhängigen Anspruch 1 gelöst. Zum Erfassen der Durchflusszeit, die ein Fluid zum Durchfließen einer Messstrecke von einem Manipulationsort zu einem von dem Manipulationsort in einer Flussrichtung des Fluids beanstandeten Detektionsort benötigt, umfasst das Verfahren die Schritte:

A) Bereitstellen eines Flusses des Fluids,
B) zu einem ersten Zeitpunkt Ändern einer kernmagnetischen oder elektronmagnetischen Polarisierung des Fluids an dem Manipulationsort,
C) Messen einer magnetischen Flussdichte eines aufgrund der kernmagnetischen oder elektronmagnetischen Polarisierung von dem Fluid ausgehenden Magnetfelds in Abhängigkeit von der Zeit mit einem Magnetometer an dem Detektionsort und
D) Bestimmen der Durchflusszeit als Differenz zwischen dem ersten Zeitpunkt und einem zweiten Zeitpunkt, wobei zu dem zweiten Zeitpunkt das Ändern der kernmagnetischen oder elektronmagnetischen Polarisierung an dem Manipulationsort aus Schritt B) eine Änderung der Flussdichte des von dem Fluid ausgehenden Magnetfelds an dem Detektionsort bewirkt, und
vor dem Schritt B)
E) Erzeugen einer kernmagnetischen oder einer elektronmagnetischen Polarisierung des Fluids durch ein Durchfließen einer Vormagnetisierungsstrecke mit einem Vormagnetisierungsmagnetfeld, und

wobei das Verfahren in Schritt B) den Schritt umfasst Einstrahlen eines elektromagnetischen Felds in das Fluid an dem Manipulationsort zu dem ersten Zeitpunkt, und
wobei das Magnetometer in einer magnetischen Abschirmung angeordnet ist, wobei in der Abschirmung ohne das Fluid ein magnetisches Feld mit einer Feldstärke von 10 $\mu$T oder weniger vorliegt.

Die grundlegende Idee der vorliegenden Erfindung ist es, eine Time-of-Flight-Messung für ein Fluid zu realisieren, wobei eine Änderung eines Zustands des Fluids an einem ersten Ort, nämlich dem Manipulationsort, zu einem ersten Zeitpunkt an einem zweiten Ort, nämlich dem Detektionsort, zu einem zweiten Zeitpunkt erfassbar ist. Dabei hängt der zweite Zeitpunkt im Wesentlichen ausschließlich von der Durchflusszeit ab, welche das Fluid zum Durchfließen der Messstrecke von dem Manipulationsort zu dem in der Flussrichtung des Fluids beabstandeten Detektionsort benötigt.

Als änderbarer Zustand des Fluids wird erfindungsgemäß die kernmagnetische oder elektronmagnetische Polarisierung des Fluids, d.h. der Kernspinzustand oder der Elektronenspinzustand des Fluids, verwendet. Die makroskopische kernmagnetische oder elektronmagnetische Polarisierung wird am Detektionsort als magnetische Flussdichte B des aufgrund der kernmagnetischen oder elektronmagnetischen Polarisierung von dem Fluid ausgehenden Magnetfelds gemessen.

Die kernmagnetische Polarisierung des Fluids bezeichnet im Sinne der vorliegenden Anmeldung die magnetische Polarisierung aufgrund der kollektiven Ausrichtung von Kernspins einer Vielzahl von Atomen des Fluids. Die elektronmagnetische Polarisierung des Fluids bezeichnet im Sinne der vorliegenden Anmeldung die magnetische Polarisierung aufgrund der kollektiven Ausrichtung von Elektronenspins einer Vielzahl von Atomen des Fluids.

Im Gegensatz zu anderen auf der kernmagnetischen oder elektronmagnetischen Polarisierung eines Fluids beruhenden Durchflussmessungen erfolgt das Messen des jeweiligen Spinzustands des Fluids an dem Detektionsort nicht mit einem spinmagnetischen Resonanzverfahren, sondern unmittelbar mithilfe von Magnetometrie. Dabei wird im Sinne der vorliegenden Anmeldung unter Magnetometrie das Messen einer magnetischen Flussdichte des Magnetfelds, welches von dem Fluid aufgrund seiner kernmagnetischen oder elektronmagnetischen Polarisierung ausgeht, verstanden. Unter der makroskopischen kernmagnetischen oder elektronmagnetischen Polarisierung, die erfindungsgemäß an dem Detektionsort über die magnetische Flussdichte gemessen wird, ist das Integral über alle von den einzelnen Spins generierten Felder zu verstehen.

Bildlich gesprochen kann man sich das Messprinzip so vorstellen, dass an dem Manipulationsort durch das Ändern der kernmagnetischen oder elektronmagnetischen Polarisierung des Fluids ein mit der Fließgeschwindigkeit des Fluids "fliegender" Zylinder generiert wird, der eine der Querschnittsfläche der Leitung entsprechende Deckelfläche aufweist. Beispielsweise wird das durch das Ändern der Polarisierung gesteuert ausgelöste Erzeugen der Deckelfläche als Startsignal zu einem ersten Zeitpunkt für die Messung der Durchflusszeit genutzt. Wenn beispielsweise dann diese Deckelfläche des Zylinders an dem Detektionsort ankommt, so dient die damit einhergehende Änderung des von dem Fluid ausgehenden Magnetfelds als Stoppsignal zu dem zweiten Zeitpunkt. Die Differenz zwischen Startsignal und Stoppsignal bzw. ersten Zeitpunkt und zweiten Zeitpunkt ist dann die zu erfassende Durchflusszeit.

Ein Fluid im Sinne der vorliegenden Anmeldung ist beispielsweise ein Gas oder eine Flüssigkeit. In Betracht kommen insbesondere auch fließfähige Gemische aus Bestandteilen mit unterschiedlichen Aggregatzuständen, beispielsweise eine Suspension. Dabei umfasst das Fluid mindestens einen Bestandteil mit einem Kernspin oder mit ungepaarten Elektronen.

Grundsätzlich ist es möglich, einem Fluid einen Bestandteil beizumischen, der ausschließlich dazu dient, die Durchflusszeit zu bestimmen, da dieser Bestandteil die erforderlichen kernmagnetischen oder elektronmagnetischen Eigenschaften aufweist.

Ein Beispiel für einen Bestandteil eines Fluids mit einem Kernspin ist Wasserstoff. In einer Ausführungsform umfasst das Fluid Wasser oder ein Öl, die jeweils Wasserstoff enthalten.

Zum Bewirken der Änderung der kernmagnetischen oder elektronmagnetischen Polarisierung des Fluids an dem Manipulationsort zu dem ersten Zeitpunkt kommt eine Reihe von Methoden in Betracht.

Grundsätzlich ist es für die vorliegende Erfindung unerheblich, auf welche Weise das Ändern der kernmagnetischen oder elektronmagnetischen Polarisierung zu dem ersten Zeitpunkt erfolgt, so lange diese zu dem ersten Zeitpunkt gesteuert ausgelöst wird. Daher umfasst das Ändern der kernmagnetischen oder elektronmagnetischen Polarisierung in Schritt B) entweder ein Kippen der Polarisierung oder ein Zerstören der Polarisierung durch Einstrahlen eines elektromagnetischen Felds in das Fluid oder ein Erzeugen, Zerstören oder Ändern der Polarisierung durch Anlegen, Ausschalten oder Ändern eines, vorzugsweise statischen, Magnetfelds an das Fluid.

Dabei setzt das Ändern immer voraus, dass das elektromagnetische Feld oder das, vorzugsweise statische, Magnetfeld ein- und ausschaltbar oder modulierbar ist. Die genannten verschiedenen Varianten zum Ändern der kernmagnetischen oder elektronmagnetischen Polarisierung in Schritt B) werden nachfolgend in verschiedenen Ausführungsformen davon detaillierter beschrieben.

Erfindungsgemäß wird eine bereits bei Eintreffen des Fluids an dem Manipulationsort bestehende kernmagnetische oder elektronmagnetische Polarisierung des Fluids zu dem ersten Zeitpunkt geändert. Zu diesem Zweck umfasst das Verfahren vor dem Schritt B) den Schritt

E) Erzeugen einer kernmagnetischen oder einer elektronmagnetischen Polarisierung des Fluids durch ein Durchfließen einer Vormagnetisierungsstrecke mit einem Vormagnetisierungsmagnetfeld,

wobei das Verfahren in Schritt B) den Schritt umfasst Einstrahlen eines elektromagnetischen Felds in das Fluid an dem Manipulationsort zu dem ersten Zeitpunkt.

Das vorzugsweise statische Vormagnetisierungsmagnetfeld der Vormagnetisierungsstrecke wird entweder mit einem Permanentmagneten oder einem Elektromagneten erzeugt, wobei das Vormagnetisierungsmagnetfeld das durchströmende Fluid durchsetzt und die Polarisierung der Spins des Fluids bewirkt. In einer Ausführungsform der Erfindung ist der Permanentmagnet der Vormagnetisierungsstrecke ein Halbach-Array.

Die Atomkerne der Elemente, die einen Kernspin besitzen, besitzen auch ein durch den Kernspin hervorgerufenes magnetisches Moment welches in dieselbe Richtung wie der Kernspin zeigt. Das magnetische Moment eines Atomkerns richtet sich bei Anwesenheit eines makroskopischen Magnetfelds parallel zu diesem Magnetfeld aus. Über die Vormagnetisierungsstrecke richten sich nun die Atomkerne entlang des starken Magnetfeldes aus und erzeugen so eine kernmagnetische Polarisierung (oder auch Magnetisierung). Eine analoge Betrachtung gilt für die Elektronenspins.

In einer Ausführungsform der Erfindung ist der Manipulationsort durch eine Abstandsstrecke von der Vormagnetisierungsstrecke beabstandet. Dabei wirkt auf der Abstandsstrecke vorzugsweise ein Magnetfeld auf das Fluid, das derart ausgerichtet und angeordnet ist, dass die kernmagnetische oder elektronmagnetische Polarisierung aufgrund des Vormagnetisierungsmagnetfelds entlang der Abstandsstrecke im Wesentlichen erhalten bleibt. Dies stellt sicher, dass die Polarisierung im Wesentlichen auch noch am Manipulationsort vorhanden ist.

In einer Ausführungsform mit einer Erzeugung einer kernmagnetischen oder elektronmagnetischen Polarisierung des Fluids mittels einer Vormagnetisierungsstrecke erfolgt das Ändern der Polarisierung, so wie es dem Fluid durch das Vormagnetisierungsmagnetfeld in der Vormagnetisierungsstrecke aufgeprägt wurde, in Schritt B) an dem Manipulationsort entweder durch ein Kippen (Englisch: flip) der Polarisierung oder durch ein Zerstören der Polarisierung. Beide Prozesse werden durch Einstrahlen eines elektromagnetischen Felds in das Fluid bewirkt.

Um ein Kippen zu bewirken, wird zusätzlich zu dem elektromagnetischen Feld an dem Manipulationsort ein statisches Magnetfeld an das Fluid angelegt, sodass die Spins eine Präzessionsbewegung durchlaufen. Es versteht sich, dass in einer solchen Ausführungsform die Frequenz des elektromagnetischen Felds gleich der Larmorfrequenz $\omega_L$ der Spins ist. Die typischen Frequenzen des an dem Manipulationsort eingestrahlten elektromagnetischen Felds liegen daher im Bereich von 3 Hz bis 3 THz (umgangssprachlich Radiofrequenz-(RF-)Feld).

Das in das Fluid eingestrahlte elektromagnetische Feld kann allerdings nicht nur zum Kippen der Polarisierung eingesetzt werden, sondern auch zu einer Zerstörung der Polarisierung. In einem solchen Fall ist nicht notwendigerweise zusätzlich zu dem Einstrahlen des elektromagnetischen Felds auch ein Anlegen eines statischen magnetischen Felds an das Fluid erforderlich.

Bei einer alternativen Ausführungsform, die nicht Teil der Erfindung ist, wird nicht die nach dem Durchlaufen einer Vormagnetisierungsstrecke bestehende Polarisierung an dem Manipulationsort geändert, sondern vielmehr wird die Polarisierung zu dem ersten Zeitpunkt mittels eines vorzugsweise statischen Magnetfelds gesteuert erzeugt. Dazu umfasst das Verfahren in diesem Fall in Schritt B) ein Erzeugen einer kernmagnetischen oder einer elektronmagnetischen Polarisierung des Fluids durch ein Durchfließen einer Magnetisierungsstrecke mit einem schaltbaren Magnetfeld, wobei das Magnet zu dem ersten Zeitpunkt geschaltet, d.h. ein- oder ausgeschaltet oder seine auf das Fluid einwirkende magnetische Flussdichte geändert, wird.

Es versteht sich, dass in einer solchen Ausführungsform das Magnetfeld vorzugsweise von einem Elektromagneten generiert wird, dessen das Fluid durchsetzende Flussdichte von dem Strom durch eine Spule des Elektromagneten abhängt. Grundsätzlich ist jede Änderung des Magnetfelds, welche sich messbar auf die Polarisierung des Fluids an dem Detektionsort auswirkt, geeignet. Aufgrund der vergleichsweise langen Zeitkonstanten für die Spinrelaxation nach dem Abschalten oder Verringern der Flussdichte des Magnetfelds ist in einer Ausführungsform jedoch das Schalten zu dem ersten Zeitpunkt ein Einschalten des Magnetisierungsmagnetfelds.

In einer Ausführungsform der Erfindung wird in Schritt B) durch das Ändern der kernmagnetischen oder elektronmagnetischen Polarisierung der in Schritt C) erfassten Flussdichte des von dem Fluid ausgehenden Magnetfelds ein frei wählbarer, vorzugsweise periodischer oder quasi-periodischer, zeitlicher Verlauf aufgeprägt. Dabei wird gewissermaßen dem Magnetfeld des Fluids aufgrund der makroskopischen Polarisierung eine Amplitudenmodulation aufgeprägt. So können dann die aus dem Stand der Technik für Time-of-Flight-Messungen mit elektromagnetischer Strahlung mit optischen oder Radarfrequenzen bekannten Modulationsverfahren verwendet werden, um eine eindeutige Zeitbestimmung auch über einen großen Dynamikbereich der Durchflussgeschwindigkeit des Fluids zu ermöglichen. Es versteht sich, dass für das beliebige Aufprägen eines zeitlichen Verlaufs der von dem Fluid ausgehenden magnetischen Flussdichte insbesondere Ausführungsformen geeignet sind, bei welchen die von einer Vormagnetisierungsstrecke erzeugte Polarisierung mittels eines elektromagnetischen Felds gekippt oder zerstört wird.

Grundsätzlich sind für das Messen der magnetischen Flussdichte in der Umgebung des Fluids, alle Typen von Magnetometern mit hinreichender Empfindlichkeit geeignet.

In einer Ausführungsform der Erfindung wird ein Magnetometer verwendet, welches eine hohe Empfindlichkeit aufweist und das B-Feld mit großem Signal-Rausch-Abstand misst, um auch kleine Änderungen im B-Feld erkennen zu können. In einer Ausführungsform der Erfindung liegen der Rauschpegel des Magnetometers sowie die Störeinflüsse in einem Bereich von 1 pT oder weniger.

Ein Beispiel für ein geeignetes Magnetometer ist ein supraleitendes Quanteninterferometer (SQUID; Englisch: super conducting quantum interference device). Allerdings können die supraleitenden Teile eines SQUID nur bei tiefen Temperaturen mit dem erforderlichen Raum füllenden apparativen Aufwand betrieben werden.

In einer Ausführungsform der Erfindung ist daher das Magnetometer ein bei Raumtemperatur betreibbares Magnetometer.

Ein geeignetes Magnetometer ist ein optisch gepumptes Magnetometer (OPM; Englisch: optically pumped magnetometer). In einem optisch gepumpten Magnetometer werden gasförmige Atome als Magnetfeldsensoren eingesetzt. Zu diesem Zweck wird der quantenmechanische Spinzustand der Atome mit Laserlicht präpariert ("gepumpt") und die Wirkung des zu messenden Magnetfelds auf diesen Zustand der verwendeten Atome wird mit Laserlicht ausgelesen. Bei der Präparation werden die Spins der in einer Gaszelle befindlichen Atome zu einer kohärenten Rotation angeregt. In dem zu messenden Magnetfeld präzedieren die Spins dann kollektiv mit der Larmorfrequenz, welche proportional zur magnetischen Flussdichte ist. Die Transmission elektromagnetischer Strahlung mit einer gegebenen Frequenz durch die Gaszelle wiederum hängt von der Larmorfrequenz und damit der zu messenden magnetischen Flussdichte ab. Diese Wirkung der zu messenden magnetischen Flussdichte auf die Transmission elektromagnetischer Strahlung durch die Gaszelle lässt sich optisch messen.

Man unterscheidet zwischen optisch gepumpten Nullfeld-Magnetometern und optisch gepumpten Gesamtfeld-Magnetometern (letztere werden auch als Erdfeld-Magnetometer bezeichnet).

Die Messung in einem Nullfeld-OPMs basiert auf einer Resonanz, welche sich am Nullpunkt des Magnetfelds manifestiert. Das Licht eines abgestimmten Lasers durchdringt die Gaszelle mit den Atomen und wird dahinter von einem Photodetektor erfasst. Wenn das Hintergrundmagnetfeld gleich Null ist, sind die Atome in der Gaszelle weitgehend transparent. Ein Magnetfeld in einer Richtung senkrecht zum Lichtweg bewirkt, dass die Atome mehr Strahlung absorbieren. Der Photodetektor erfasst diese Änderung in der Transmission, welches proportional zu dem durch die Gaszelle transmittierten Licht ist.

In einer Ausführungsform eines solchen Nullfeld-OPMs haben die Atome in der Gaszelle ohne angelegtes Magnetfeld (Nullfeld) eine Absorptionsresonanz. Diese Absorptionsresonanz im Null-feld ist in einer Ausführungsform besonders schmal (SERF; engl.: spin exchange relaxation-free); somit sind kleinste Änderungen der magnetischen Flussdichte des zu messenden Magnetfelds erfassbar. Eine geringe Änderung des Magnetfelds bewirkt eine große Änderung in der Transmission des Lichts durch die Gaszelle. Der OPM selbst weist in einer solchen Ausführungsform einen Elektromagneten zum Erzeugen eines Kompensationsfelds auf. Dieses Kompensationsfeld wird genutzt, um das Magnetfeld in der Zelle in der Gegenwart des zu messenden Felds auf Null zu bringen, wobei der Ausgang des Photodetektors als Regelgröße dient. Der zum Erzeugen des Kompensationsfelds benötigte Strom ist dann ein Maß für die zu messende, auf die Atome in der Gaszelle einwirkende und von dem Fluid ausgehende magnetische Flussdichte.

Gesamtfeld-OPMs können selbst im Magnetfeld der Erde mit hoher Genauigkeit arbeiten. Die Atome in der Gaszelle haben eine genau definierte Resonanzfrequenz, die direkt proportional zur Flussdichte des zu messenden Magnetfelds ist. Interne Spulen legen ein mit einer variierenden Modulationsfrequenz moduliertes Magnetfeld an die Gaszelle an, um diese Resonanzfrequenz durch Überwachung des durch die Zelle transmittierten Lichts aufzulösen. Die Resonanzfrequenz ist erreicht, wenn die Absorption maximiert ist. Das Ausgangssignal des Magnetometers basiert bei einem Gesamtfeld-OPM auf dem Wert der Modulationsfrequenz mit maximaler Absorption, wobei diese Modulationsfrequenz von der magnetischen Flussdichte abhängt. Gesamtfeld-OPMs eignen sich für Messungen im Erdfeld, d.h. ohne zusätzliche Abschirmung mit hoher Genauigkeit.

Die Empfindlichkeit von OPMs ist ähnlich der von SQUIDs. Als sensitives Medium in einem OPM dienen gasförmige Atome, bspw. Helium 4 ($^4$He) sowie verdampfte Alkalimetalle wie Kalium, Rubidium oder Cäsium. Daher sind keine tiefen, kryogenen Temperaturen für den Betrieb erforderlich. OPMs sind mit kleinen Abmessungen realisierbar und sind daher vollständig in einem von einer Abschirmung definierten Probenraum unterzubringen.

Eine ähnlich hohe Sensitivität wie mit einem OPM kann auch mit anderen bei Raumtemperatur zu betreibenden Magnetometern, beispielsweise mit auf der Messung der Magnetoresistivität eines Probenmaterials beruhenden Magnetometern, so wie sie beispielsweise von der Firma TDK unter der Marke Nivio kommerziell erhältlich sind, bereitgestellt werden.

In einer Ausführungsform der Erfindung ist das Magnetometer ein Null-Feld-Magnetometer. Daher ist in einer Ausführungsform das Magnetometer in einer magnetischen Abschirmung angeordnet, wobei in der Abschirmung ohne das Fluid ein magnetisches Feld mit einer Feldstärke von 100 nT oder weniger vorliegt.

In einer Ausführungsform der Erfindung umfasst die magnetische Abschirmung mindestens zwei Lagen aus einem elektrisch leitfähigen Material mit hoher magnetischer Permeabilität, beispielsweise aus einem Mumetall. In einer Ausführungsform der Erfindung ist die Gestaltung der Abschirmung an die Richtung, welche eine von dem Magnetometer zu messende, von dem Fluid ausgehende magnetische Flussdichte hat, angepasst. In einer Ausführungsform der Erfindung umfasst die magnetische Abschirmung mindestens einen, vorzugsweise mehrere leitfähige, voneinander elektrisch isolierte Zylinder.

In einer Ausführungsform der Erfindung weist die magnetische Abschirmung für ein nicht moduliertes, d.h. statisches Magnetfeld einen Schirmfaktor von 1.000 oder mehr, vorzugsweise von 3.000 oder mehr und besonders bevorzugt von 8.000 oder mehr auf. In einer Ausführungsform der Erfindung beträgt der Schirmfaktor 10.000 oder mehr. Als Schirmfaktor wird das Verhältnis zwischen einem magnetischen Feld an einem Ort in dem Probenraum ohne die magnetische Abschirmung geteilt durch die magnetische Flussdichte an dem gleichen Ort in dem Probenraum mit magnetischer Abschirmung bezeichnet.

Zudem wird die oben genannte Aufgabe auch durch ein Durchflussmessgerät zum Erfassen einer Durchflusszeit, die ein Fluid zum Durchfließen einer Messstrecke von einem Manipulationsort zu einem von dem Manipulationsort beabstandeten Detektionsort benötigt, gemäß dem darauf in den beigefügten Ansprüchen gerichteten unabhängigen Anspruch gelöst. Zur Lösung dieser Aufgabe weist das Durchflussmessgerät auf:

- an dem Manipulationsort entweder eine Spule zum Erzeugen eines elektromagnetischen Felds oder eine steuerbare Magnetfeldeinrichtung zum Erzeugen eines veränderbaren magnetischen Felds, wobei die Spule oder die Magnetfeldeinrichtung derart angeordnet und eingerichtet ist, dass in dem Betrieb des Durchflussmessgerätes eine kernmagnetische oder elektronmagnetische Polarisierung des Fluids durch das elektromagnetische Feld oder das magnetische Feld an dem Manipulationsort veränderbar ist,

- ein Magnetometer an dem Detektionsort, wobei das Magnetometer derart eingerichtet und angeordnet ist, dass mit Magnetometer in dem Betrieb des Durchflussmessgeräts eine magnetische Flussdichte des aufgrund der kernmagnetischen oder elektronmagnetischen Polarisierung von dem Fluid ausgehenden Magnetfelds in Abhängigkeit von der Zeit messbar ist,

- der Messstrecke, wobei die Messstrecke derart eingerichtet und angeordnet ist, dass in dem Betrieb des Durchflussmessgeräts das Fluid entlang der Messstrecke von dem Manipulationsort zu dem Detektionsort fließt, und

- eine Steuer- und Auswertungseinrichtung,

  o wobei die Steuer- und Auswerteeinrichtung derart wirksam mit der Spule oder der Magnetfeldeinrichtung an dem Manipulationsort verbunden ist, dass in dem Betrieb des Durchflussmessgeräts eine Amplitude oder eine Frequenz des von der Spule erzeugten elektromagnetischen Felds oder eine magnetische Flussdichte des von der Magnetfeldeinrichtung erzeugten magnetischen Felds durch die Steuer- und Auswerteeinrichtung gesteuert einstellbar veränderbar ist,

  ∘ wobei die Steuer- und Auswerteeinrichtung derart eingerichtet ist, dass in dem Betrieb des Durchflussmessgerätes die Steuer- und Auswerteeinrichtung von dem Magnetometer ein die magnetische Flussdichte des von dem Fluid ausgehenden magnetischen Felds in Abhängigkeit von der Zeit repräsentierendes Messsignal erhält, und

◦ wobei die Steuer- und Auswerteeinrichtung derart eingerichtet ist, dass in dem Betrieb des Durchflussmessgerätes die Steuer- und Auswerteeinrichtung aus dem Messsignal die Durchflusszeit als Differenz zwischen einem ersten Zeitpunkt und einem zweiten Zeitpunkt bestimmt,
wobei zu dem ersten Zeitpunkt von der Steuer- und Auswerteeinrichtung gesteuert eine Änderung der kernmagnetischen oder elektronmagnetischen Polarisierung des Fluids an dem Manipulationsort erfolgt und wobei zu dem zweiten Zeitpunkt die Änderung der kernmagnetischen oder elektronmagnetischen Polarisierung an dem Manipulationsort eine Änderung der mit dem Magnetometer an dem Detektionsort zu messenden magnetischen Flussdichte des von dem Fluid ausgehenden Magnetfelds bewirkt,

wobei das Durchflussmessgerät eine Vormagnetisierungsstrecke mit einem Magneten in einer Flussrichtung des Fluids vor dem Manipulationsort aufweist,
wobei die Vormagnetisierungsstrecke derart eingerichtet und angeordnet ist, dass in einem Betrieb des Durchflussmessgeräts der Magnet eine kernmagnetische oder eine elektronmagnetische Polarisierung des entlang der Vormagnetisierungsstrecke fließenden Fluids bewirkt, und
wobei das Magnetometer in einer magnetischen Abschirmung angeordnet ist, wobei in der Abschirmung ohne das Fluid ein magnetisches Feld mit einer Feldstärke von 10 $\mu$T oder weniger vorliegt.

In einer Ausführungsform der Erfindung ist der Manipulationsort durch eine Abstandsstrecke von der Vormagnetisierungsstrecke beabstandet, wobei die Abstandsstrecke einen Magneten (Permanentmagnet oder Elektromagnet) aufweist und wobei der Magnet derart eingerichtet und angeordnet ist, dass in dem Betrieb des Durchflussmessgeräts ein stationäres Magnetfeld derart auf das Fluid entlang der Abstandsstrecke wirkt, dass die kernmagnetische oder elektronmagnetische Polarisierung des Fluids im Wesentlichen erhalten bleibt.

In einer Ausführungsform weist das Durchflussmessgerät an dem Detektionsort eine Mehrzahl von Magnetometern auf.

Weitere Vorteile, Merkmale und Anwendungsmöglichkeiten der vorliegenden Erfindung werden anhand der folgenden Beschreibung von Ausführungsformen davon und der dazugehörigen Figuren deutlich. In den Figuren sind gleiche Elemente mit gleichen Bezugszeichen bezeichnet.

Figur 1    ist eine schematische Querschnittsansicht einer ersten Ausführungsform des erfindungsgemäßen Durchflussmessgerätes.

Figur 2    zeigt oben einen Graphen mit der Auftragung der an der Spule an dem Manipulationsort anliegenden Spannungseinhüllenden in Abhängigkeit von der Zeit und unten einen Graphen mit der an dem Detektionsort erfassten Signalamplitude in Abhängigkeit von der Zeit.

Figur 3    ist eine schematische Querschnittsansicht einer Ausführungsform einer Messvorrichtung, die nicht Teil der Erfindung ist.

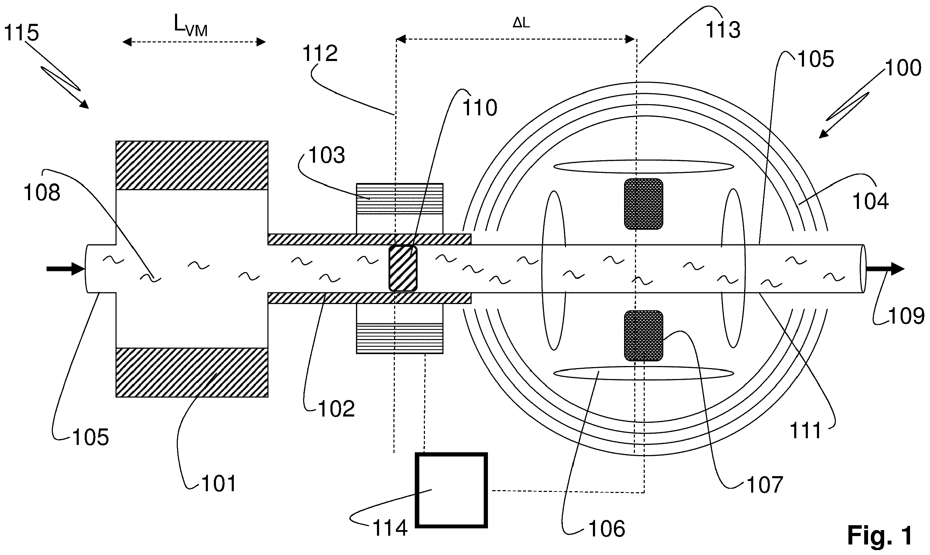

In Figur 1 ist eine schematische Querschnittsansicht einer ersten Ausführungsform eines erfindungsgemäßen Durchflussmessgeräts 100 dargestellt. Zu erfassen ist die Geschwindigkeit eines Fluids 108, das in der dargestellten Ausführungsform Wasser enthält, das eine Rohrleitung 105 in einer Flussrichtung 109 durchströmt. Zu diesem Zweck wird die Durchflusszeit, die das Fluid 108 bzw. ein markiertes Volumensegment 110 des Fluids 108 zum Durchfließen einer Messstrecke 111 mit einer Weglänge $\Delta L$ zwischen einem Manipulationsort 112 und einem Detektionsort 113 benötigt, gemessen.

Zur Markierung des Volumensegments 110 des Fluids 108 mit dem Wasser dient in der gezeigten Ausführungsform die mit einer ausgerichteten Polarisierung der Kernspins von in dem Wasser enthaltenem Wasserstoff einhergehende makroskopische, von dem Fluid 108 in dem Volumensegment 110 ausgehende magnetische Flussdichte.

Ein Rechner 114 als Steuer- und Auswerteinrichtung im Sinne der vorliegenden Anmeldung ändert zu einem ersten Zeitpunkt die Kernspinpolarisierung am Manipulationsort 112 und damit die von dem Volumensegment 110 ausgehende magnetische Flussdichte durch Ausgabe eines entsprechenden Steuersignals. Die von dem Rechner 114 veranlasste Änderung der kernmagnetischen Polarisierung des Wasserstoffs in dem Fluid 108 an dem Manipulationsort 112 bewegt sich dann mit dem in der Flussrichtung 109 fließenden Fluid 108 entlang der Messstrecke 111 bis dieses Volumensegment 110 mit der geänderten Polarisierung an dem Detektionsort 113 eintrifft und dort zu einem zweiten Zeitpunkt erfasst wird. Die Differenz zwischen dem ersten und dem zweiten Zeitpunkt ist die Durchflusszeit $\Delta t$. Der Rechner berechnet aus der Länge $\Delta L$ der Messstrecke 111 zwischen dem Manipulationsort 112 und dem Detektionsort 113 sowie der Durchflusszeit $\Delta t$ die Fließgeschwindigkeit $v$ wie folgt:

$$v = \frac{\Delta L}{\Delta t}$$

Im Folgenden wird beschrieben, wie dieses allgemeine Messprinzip in der dargestellten Ausführungsform konkret realisiert ist.

Das Fluid 108 mit dem den Wasserstoff enthaltenden Wasser durchströmt in dem Durchflussmessgerät 100 zunächst eine Vormagnetisierungsstrecke 115 mit einer Länge $L_{VM}$, wobei in der gezeigten Ausführungsform die Vormagnetisierungsstrecke 115 einen Permanentmagneten 101 aufweist. Die Atomkerne des Wasserstoffs, welche einen Kernspin besitzen, generieren auch ein durch den Kernspin bewirktes magnetisches Moment, welches in dieselbe Richtung wie der Kernspin zeigt. Das magnetische Moment des Atomkerns richtet sich dann bei Anwesenheit des von dem Permanentmagneten 101 ausgehenden statischen Magnetfelds parallel zu diesem Magnetfeld aus. Bei dem Durchfließen der Vormagnetisierungsstrecke 115 mit der Länge $L_{VM}$ richten sich nun die Spins der Atomkerne entlang des starken Magnetfelds aus. Der Aufbau der Magnetisierung folgt der nachstehenden Gesetzmäßigkeit

$$M = M_0 \left( 1 - \exp\left( - \frac{L_{VM}}{v T_1} \right) \right),$$

wobei $v$ die Strömungsgeschwindigkeit des Fluids 108 und $T_1$ die Spin-Gitter-Relaxationszeit des Wasserstoffs sind. $M_0$ ist die (von der Stärke des Magnetfeldes des Permanentmagneten 101 abhängige) maximale Magnetisierung des Wasserstoffs.

Der so mit einer kernmagnetischen Polarisierung versehene Wasserstoff strömt dann mit dem Wasser durch eine Abstandsstrecke 102, welche mit Hilfe einer geeigneten Anordnung von Magneten, in der dargestellten Ausführungsform eines Elektromagneten in Form eines Racetrack Coils, die in der Vormagnetisierungsstrecke 115 erzeugte Polarisierung im Wesentlichen erhält.

Ohne die Maßnahmen am Manipulationsort 112 würde das Fluid 108 mit einer im Wesentlichen konstanten kernmagnetischen Polarisierung des Wasserstoffs und damit einer zeitlich im Wesentlichen konstanten von dem Fluid 108 ausgehenden magnetischen Flussdichte den Detektionsort 113 erreichen. Wenn man dort die magnetische Flussdichte des von der kernmagnetischen Polarisierung des Wasserstoffs ausgehenden Magnetfelds erfasst, so ist diese zeitlich im Wesentlichen konstant.

An dem Manipulationsort 112 ist weiterhin eine Radiofrequenzspule 103 zum Einstrahlen eines elektromagnetischen Felds in das Fluid 108 angeordnet. Zusätzlich ist an dem Manipulationsort ein Permanentmagnet mit einem entsprechend ausgerichteten Magnetfeld vorgesehen (in Fig. 1 nicht dargestellt). Die Magnetisierung durchläuft in einem solchen statischen Magnetfeld eine Präzessionsbewegung. Die Frequenz der Präzision wird als Larmorfrequenz $\omega_L$ bezeichnet und ist dem Betrag der magnetischen Flussdichte des Permanentmagneten proportional ($\omega_L = \gamma B$, wobei $\gamma$ das gyromagnetische Verhältnis des Atomkerns ist). Durch die Kopplung der präzedierenden Magnetisierung an ein eingestrahltes elektromagnetisches RF-Feld mit der Larmorfrequenz $\omega_L$, welches mit der Spule 103 generiert wird, kippt die Ausrichtung der kernmagnetischen Magnetisierung. Dieser auch als "Spin-Flip" bezeichnete Prozess kann durch Modulieren des von der Spule 103 generierten und in das Fluid 108 eingestrahlten RF-Felds ebenfalls moduliert werden. Hat das von der Spule 103 generierte RF-Feld zu einem ersten Zeitpunkt T1 eine maximale Amplitude, so wird ab diesem ersten Zeitpunkt das Fluid 108 mit einem maximalen Anteil der geflippten Magnetisierung von dem Manipulationsort 112 zu den Detektionsort 113 strömen. Bei "Ankunft" des Fluids 108 mit der geflippten Polarisierung ist diese durch eine Änderung der von dem Fluid ausgehenden magnetischen Flussdichte an dem Detektionsort 113 messbar.

Durch Ein- und Ausschalten der Spule 103 bzw. durch das Modulieren der Amplitude des mit der Spule generierten und in das Fluid 108 eingestrahlten RF-Felds lässt sich der kernmagnetischen Polarisierung des Wassersstoffs und damit der Flussdichte des von dem Fluid 108 ausgehenden Magnetfelds ein Signal oder Signalsequenzen aufprägen.

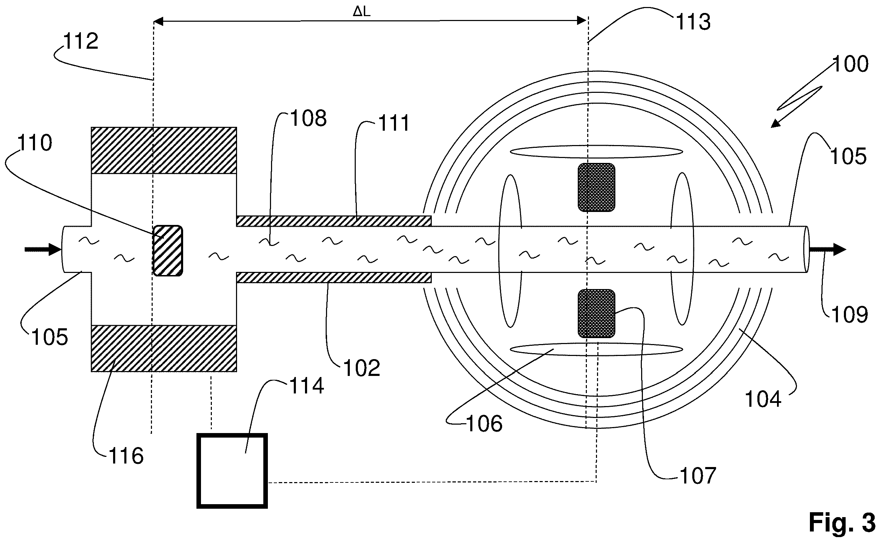

Die Ausführungsformen der Figuren 1 und 3 nutzen zum Erfassen der magnetischen Flussdichte an dem Detektionsort 113 jeweils ein optisch gepumptes Nullfeld-Magnetometer (OPM). Nullfeldsensoren können nur extrem geringe magnetische Flussdichten messen, wobei alle Umgebungsfelder abzuschirmen sind.

Daher ist das Magnetometer 107 in einer magnetischen Abschirmung 104, aber außerhalb der Rohrleitung 105 angeordnet. In den gezeigten Ausführungsformen besteht die Abschirmung 104 aus vier konzentrischen, elektrisch gegeneinander isolierten Hohlzylindern aus einem Mumetall-Blech mit hoher elektrischer Leitfähigkeit und hoher magnetischer Permeabilität. Über geeignet angeordnete Spulen 106 ist in der Abschirmung 104 ein magnetisches Umgebungsfeld anlegbar, um das Magnetometer bei seinem idealen Arbeitspunkt betreiben zu können.

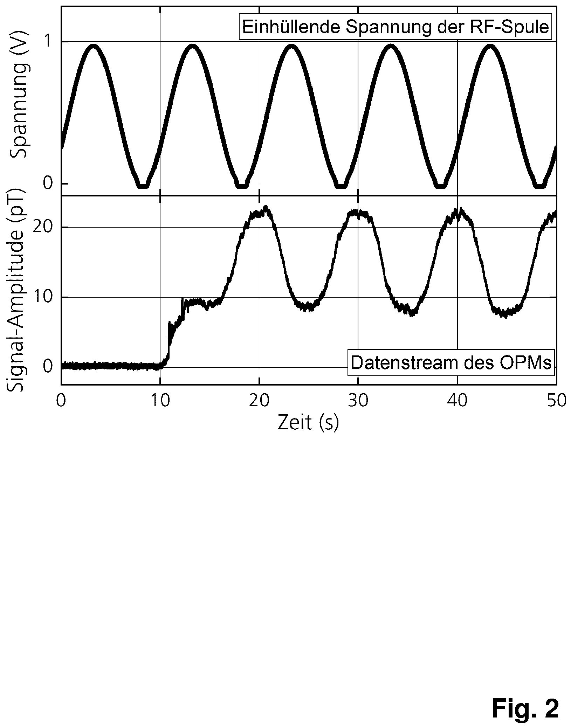

Figur 2 zeigt ein gemessenes Beispiel einer Messreihe mit dem Durchflussmessgerät 100 aus Figur 1. In dem oberen Graphen der Figur 2 ist die periodische Amplitudenmodulation der RF-Spule 103 gezeigt. Der Graph zeigt die zum Treiben der Amplitudenmodulation des RF-Signals verwendete einhüllende Spannung in Volt aufgetragen gegenüber der Zeit in Sekunden.

Der untere Graph der Figur 2 hingegen zeigt die Signal-Amplitude in pT aufgetragen gegenüber der Zeit in Sekunden an dem Magnetometer 107. Die Zeitachsen des oberen Graphen und des unteren Graphen sind identisch. Deutlich erkennbar ist der zeitliche Versatz zwischen jedem Maximum der Spannung der Signal-Amplitude des eingestrahlten RF-Felds an dem Manipulationsort 112 und dem dazugehörigen durch den Spin-Flip ausgelöste Maximum der Signalamplitude an dem Detektionsort 113. Dieser Versatz ist gleich der Durchflusszeit $\Delta t$, die das Volumensegment 110 des Wassers 108 von dem Manipulationsort 112 zu dem Detektionsort 113 benötigt.

Figur 3 zeigt eine alternative Ausführungsform des Durchflussmessgeräts 100, wobei diese Variante ohne die Spule 103 für das RF-Feld auskommt. Stattdessen ist die Vormagnetisierungsstrecke 115 ersetzt durch einen von dem Rechner 114 ein- und ausschaltbaren Elektromagneten 116. Die Messstrecke 111 erstreckt sich daher in dieser Ausführungsform von dem Manipulationsort 112 in dem Bereich des Elektromagneten 116 bis zu dem Detektionsort 113. So lange der Elektromagnet 116 ausgeschaltet ist, ist die Orientierung der kernmagnetischen Spins der einzelnen Moleküle des Wassers 108 statistisch ungeordnet und es gibt keine als magnetische Flussdichte messbare makroskopische Polarisierung. Schaltet man den Elektromagneten 116 zu dem ersten Zeitpunkt ein, so erfolgt eine kernmagnetische Magnetisierung, so wie sie zuvor permanent in der Vormagnetisierungsstrecke 115 erzeugt wurde. Setzt man das Einschalten des Elektromagneten 116 als Startsignal, so kann man wieder die Durchflusszeit, welche ein polarisiertes Volumensegment 110 von dem Manipulationsort zu dem Detektionsort 113 benötigt, messen, so wie dies für die Ausführungsform der Figur 1 zuvor beschrieben wurde.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

**Bezugszeichen**

| 100 | Durchflussmessgerät |
|---|---|
| 101 | Permanentmagnet |
| 102 | Abstandsstrecke |
| 103 | Spule |
| 104 | Abschirmung |
| 105 | Rohrleitung |
| 106 | Spulen |
| 107 | Magnetometer |
| 108 | Fluid |
| 109 | Flussrichtung |
| 110 | Volumensegment |
| 111 | Messstrecke |
| 112 | Manipulationsort |
| 113 | Detektionsort |
| 114 | Rechner |
| 115 | Vormagnetisierungsstrecke |
| 116 | schaltbarer Elektromagnet |

**Patentansprüche**

1. Verfahren zum Erfassen einer Durchflusszeit, die ein Fluid (108) zum Durchfließen einer Messstrecke (111) von einem Manipulationsort (112) zu einem von dem Manipulationsort (112) in einer Flussrichtung (109) des Fluids (108) beabstandeten Detektionsort (113) benötigt, mit den Schritten

   A) Bereitstellen eines Flusses des Fluids (108),
   B) zu einem ersten Zeitpunkt Ändern einer kernmagnetischen oder elektronmagnetischen Polarisierung des Fluids (108) an dem Manipulationsort (112),
   C) Messen einer magnetischen Flussdichte eines aufgrund der kernmagnetischen oder elektronmagnetischen Polarisierung von dem Fluid ausgehenden Magnetfelds in Abhängigkeit von der Zeit mit einem Magnetometer (107) an dem Detektionsort (113), und
   D) Bestimmen der Durchflusszeit als Differenz zwischen dem ersten Zeitpunkt und einem zweiten Zeitpunkt, wobei zu dem zweiten Zeitpunkt das Ändern der kernmagnetischen oder elektronmagnetischen Polarisierung an dem Manipulationsort (112) aus Schritt B) eine Änderung der Flussdichte des von dem Fluid (108) ausgehenden Magnetfelds an dem Detektionsort (113) bewirkt,

   **dadurch gekennzeichnet, dass**

   das Verfahren vor dem Schritt B) den Schritt aufweist:
   E) Erzeugen einer kernmagnetischen oder einer elektronmagnetischen Polarisierung des Fluids durch ein Durchfließen einer Vormagnetisierungsstrecke (115) mit einem Vormagnetisierungsmagnetfeld, und

wobei das Verfahren in Schritt B) den Schritt umfasst

Einstrahlen eines elektromagnetischen Felds in das Fluid an dem Manipulationsort (112) zu dem ersten Zeitpunkt, und

wobei das Magnetometer (107) in einer magnetischen Abschirmung (104) angeordnet ist, wobei in der Abschirmung (104) ohne das Fluid (108) ein magnetisches Feld mit einer Feldstärke von 10 μT oder weniger vorliegt.

2. Verfahren nach dem vorhergehenden Anspruch, wobei das Ändern der kernmagnetischen oder elektronmagnetischen Polarisierung in Schritt B) entweder ein Kippen der Polarisierung oder ein Zerstören der Polarisierung durch Einstrahlen eines elektromagnetischen Felds in das Fluid oder ein Erzeugen der Polarisierung durch Anlegen eines Magnetfelds an das Fluid, ein Zerstören der Polarisierung durch Ausschalten eines Magnetfelds oder ein Ändern der Polarisierung durch Ändern eines Magnetfelds umfasst.

3. Verfahren nach einem der vorhergehenden Ansprüche, wobei der Manipulationsort (112) durch eine Abstandsstrecke (102) von der Vormagnetisierungsstrecke (115) beabstandet ist, wobei auf der Abstandsstrecke (102) vorzugsweise ein Magnetfeld auf das Fluid wirkt, so dass die kernmagnetische oder elektronmagnetische Polarisierung im Wesentlichen erhalten bleibt.

4. Verfahren nach einem der vorhergehenden Ansprüche, wobei in Schritt B) durch das Ändern der kernmagnetischen oder elektronmagnetischen Polarisierung der in Schritt C) erfassten Flussdichte des von dem Fluid ausgehenden Magnetfelds ein frei wählbarer, vorzugsweise periodischer oder quasi-periodischer, zeitlicher Verlauf aufgeprägt wird.

5. Durchflussmessgerät (100) zum Erfassen einer Durchflusszeit, die ein Fluid zum Durchfließen einer Messstrecke (111) von einem Manipulationsort (112) zu einem von dem Manipulationsort (112) beabstandeten Detektionsort (113) benötigt, mit

einer Spule (103) zum Erzeugen eines elektromagnetischen Felds oder einer steuerbaren Magnetfeldeinrichtung (116) zum Erzeugen eines magnetischen Felds an dem Manipulationsort (112),

wobei die Spule (103) oder die Magnetfeldeinrichtung (116) derart angeordnet und eingerichtet ist, dass in dem Betrieb des Durchflussmessgeräts (100) eine kernmagnetische oder elektronmagnetische Polarisierung des Fluids durch das elektromagnetische Feld oder das magnetische Feld an dem Manipulationsort (112) veränderbar ist,

einem Magnetometer (107) an dem Detektionsort (113),

wobei das Magnetometer (107) derart eingerichtet und angeordnet ist, dass mit dem Magnetometer (107) in dem Betrieb des Durchflussmessgeräts (100) eine magnetische Flussdichte des aufgrund der kernmagnetischen oder elektronmagnetischen Polarisierung von dem Fluid ausgehenden Magnetfelds in Abhängigkeit von der Zeit messbar ist,

der Messstrecke (111),

wobei die Messstrecke (111) derart eingerichtet und angeordnet ist, dass in dem Betrieb des Durchflussmessgeräts (100) das Fluid entlang der Messstrecke (111) von dem Manipulationsort (112) zu dem Detektionsort (113) fließt, und

einer Steuer- und Auswerteeinrichtung (114),

wobei die Steuer- und Auswerteeinrichtung (114) derart wirksam mit der Spule (103) oder der Magnetfeldeinrichtung (116) an dem Manipulationsort (112) verbunden ist, dass in dem Betrieb des Durchflussmessgeräts (100) eine Amplitude oder eine Frequenz des von der Spule (103) erzeugten elektromagnetischen Felds oder eine magnetische Flussdichte des von der Magnetfeldeinrichtung (116) erzeugten magnetischen Felds durch die Steuer- und Auswerteeinrichtung (114) gesteuert einstellbar veränderbar ist,

wobei die Steuer- und Auswerteeinrichtung (114) derart wirksam mit dem Magnetometer (107) verbunden ist, dass in dem Betrieb des Durchflussmessgeräts (100) die Steuer- und Auswerteeinrichtung (114) von dem Magnetometer (107) ein die magnetische Flussdichte des von dem Fluid ausgehenden magnetischen Felds in Abhängigkeit von der Zeit repräsentierendes Messsignal erhält, und

wobei die Steuer- und Auswerteeinrichtung (114) derart eingerichtet ist, dass in dem Betrieb des Durchflussmessgeräts (100) die Steuer- und Auswerteeinrichtung (114) aus dem Messsignal die Durchflusszeit als Differenz zwischen einem ersten Zeitpunkt und einem zweiten Zeitpunkt bestimmt,

wobei zu dem ersten Zeitpunkt eine Änderung der kernmagnetischen oder elektronmagnetischen Polarisierung des Fluids an dem Manipulationsort (112) erfolgt und

wobei zu dem zweiten Zeitpunkt die Änderung der kernmagnetischen oder elektronmagnetischen Polarisierung an dem Manipulationsort (112) eine Änderung der mit dem Magnetometer (107) an dem Detektionsort (113) zu messenden magnetischen Flussdichte des von dem Fluid ausgehenden Magnetfelds bewirkt,

**dadurch gekennzeichnet, dass**

das Durchflussmessgerät (100) eine Vormagnetisierungsstrecke (115) mit einem Magneten (101) in einer Flussrichtung des Fluids vor dem Manipulationsort aufweist, wobei die Vormagnetisierungsstrecke (115) derart eingerichtet und angeordnet ist, dass in einem Betrieb des Durchflussmessgeräts (100) der Magnet (101) eine kernmagnetische oder eine elektronmagnetische Polarisierung des entlang der Vormagnetisierungsstrecke (115) fließenden Fluids bewirkt, und wobei das Magnetometer (107) in einer magnetischen Abschirmung (104) angeordnet ist, wobei in der Abschirmung (104) ohne das Fluid (108) ein magnetisches Feld mit einer Feldstärke von 10 μT oder weniger vorliegt.

6. Durchflussmessgerät (100) nach dem vorhergehenden Anspruch, wobei der Manipulationsort (112) durch eine Abstandsstrecke (102) von der Vormagnetisierungsstrecke (115) beabstandet ist, wobei die Abstandsstrecke (102) einen Magneten aufweist und wobei der Magnet derart eingerichtet und angeordnet ist, dass in dem Betrieb des Durchflussmessgeräts (100) ein stationäres Magnetfeld derart auf das Fluid entlang der Abstandsstrecke (102) wirkt, dass die kernmagnetische oder elektronmagnetische Polarisierung des Fluids im Wesentlichen erhalten bleibt.

7. Durchflussmessgerät (100) nach Anspruch 5 oder 6, wobei das Magnetometer (107) ein optisch gepumptes Magnetometer (107) ist.

8. Durchflussmessgerät (100) nach einem der Ansprüche 5 bis 7, wobei das Durchflussmessgerät (100) an dem Detektionsort (113) eine Mehrzahl von Magnetometern (107) mit voneinander verschiedener Orientierung aufweist.

**Claims**

1. A method for detecting a flow time required by a fluid (108) to flow through a measuring path (111) from a manipulation location (112) to a detection location (113) spaced from the manipulation location (112) in a flow direction (109) of the fluid (108), the method comprising the steps of

A) providing a flow of the fluid (108),
B) at a first point in time, changing a nuclear magnetic or electron magnetic polarisation of the fluid (108) at the manipulation location (112),
C) measuring a magnetic flux density of a magnetic field emanating from the fluid due to the nuclear magnetic or electron magnetic polarisation as a function of time with a magnetometer (107) at the detection location (113), and
D) determining the flow time as a difference between the first point in time and a second point in time, wherein at the second point in time the change in the nuclear magnetic or electron magnetic polarisation at the manipulation location (112) from step B) causes a change in the flux density of the magnetic field emanating from the fluid (108) at the detection location (113),

**characterised in that**

the method comprises the step before step B):
E) generating a nuclear magnetic or an electron magnetic polarisation of the fluid by flowing through a bias magnetisation path (115) comprising a bias magnetic field, and wherein the method in step B) comprises the step of
irradiating an electromagnetic field into the fluid at the detection location (113) at the first point in time, and wherein the magnetometer (107) is located in a magnetic shield (104), wherein in the magnetic shield (104) without the fluid (108) there is a magnetic field having a field strength of 10 μT or less.

2. The method according to the previous claim, wherein changing the nuclear magnetic or electron magnetic polarisation in step B) comprises either tilting the polarisation or destroying the polarisation by radiating an electromagnetic field into the fluid or generating the polarisation by applying a magnetic field to the fluid, destroying the polarisation by switching off a magnetic field or changing the polarisation by changing a magnetic field.

3. The method according to any one of the previous claims, wherein the manipulation location (112) is spaced apart from the bias magnetisation path (115) by a spacer path (102), wherein a magnetic field preferably acts on the fluid on the spacer path (102) so that the nuclear magnetic or electron magnetic polarisation is substantially maintained.

4. The method according to any one of the previous claims, wherein in step B) a freely selectable, preferably periodic or quasi-periodic, time characteristic is imposed on the flux density of the magnetic field emanating from the fluid detected in step C) by changing the nuclear magnetic or electron-magnetic polarisation.

5. A flow meter (100) for detecting a flow time required by a fluid to flow through a measuring path (111) from a manipulation location (112) to a detection location (113) spaced from the manipulation location (112), the flow meter comprising

a coil (103) for generating an electromagnetic field or a controllable magnetic field device (116) for generating a magnetic field at the manipulation location (112),
wherein the coil (103) or the magnetic field device (116) is located and arranged in such a way that during operation of the flowmeter (100) a nuclear magnetic polarisation or an electron magnetic polarisation of the fluid can be changed by the electromagnetic field or the magnetic field at the manipulation location (112),
a magnetometer (107) at the detection location (113),
wherein the magnetometer (107) is arranged and located in such a way that a magnetic flux density of the magnetic field emanating from the fluid due to the nuclear magnetic or electron magnetic polarisation can be measured as a function of time with the magnetometer (107) during operation of the flowmeter (100),
the measuring path (111),
wherein the measuring path (111) is arranged and located in such a way that during operation of the flowmeter (100) the fluid flows along the measuring path (111) from the manipulation location (112) to the detection location (113), and
a control and processing device (114),

wherein the control and processing device (114) is effectively connected to the coil (103) or the magnetic field device (116) at the manipulation location (112) in such a way that, during operation of the flow meter (100), an amplitude or a frequency of the electromagnetic field generated by the coil (103) or a magnetic flux density of the magnetic field generated by the magnetic field device (116) can be varied in a controlled and adjustable manner by the control and processing device (114),
wherein the control and processing device (114) is operatively connected to the magnetometer (107) such that during operation of the flow meter (100) the control and processing device (114) receives from the magnetometer (107) a measurement signal representing the magnetic flux density of the magnetic field emanating from the fluid as a function of time, and
wherein the control and processing device (114) is set up such that during operation of the flow meter (100) the control and processing device (114) determines the flow time from the measurement signal as the difference between a first point in time and a second point in time,

wherein a change in the nuclear magnetic or electron magnetic polarisation of the fluid at the manipulation location (112) takes place at the first point in time, and
wherein at the second point in time the change in the nuclear magnetic or electromagnetic polarisation at the manipulation location (112) causes a change in the magnetic flux density of the magnetic field emanating from the fluid to be measured by the magnetometer (107) at the detection location (113),

**characterised in that**

the flow meter (100) comprises a bias magnetisation path (115) comprising a magnet (101), wherein the bias magnetisation path (115) is arranged and located such that, during operation of the flowmeter (100), the magnet (101) causes a nuclear magnetic or an electromagnetic polarisation of the fluid flowing along the bias magnetisation path (115), and
wherein the magnetometer (107) is located in a magnetic shield (104), wherein in the magnetic shield (104) without the fluid (108) there is a magnetic field having a field strength of 10 µT or less.

6. The flow meter (100) according to the previous claim, wherein the manipulation location (112) is spaced from the bias magnetisation path (115) by a spacer path (102), wherein the spacer path (102) comprises a magnet and wherein the magnet is arranged and located such that, during operation of the flow meter (100), a stationary magnetic field acts on the fluid along the spacer path (102) such that the nuclear magnetic or electron magnetic polarisation of the fluid is substantially maintained.

7. The flow meter (100) according to any one of claims 5 or 6, wherein the magnetometer (107) is an optically pumped magnetometer (107).

8. The flow meter (100) according to any one of claims 5 to 7, wherein the flow meter (100) comprises a plurality of magnetometers (107) at the detection location (113) having different orientations from each other.

## Revendications

1. Procédé de détection du temps d'écoulement traversant nécessaire à un fluide (108) pour s'écouler à travers une section de mesure (111) depuis un emplacement de manipulation (112) jusqu'à un emplacement de détection (113) espacé de l'emplacement de manipulation (112) dans une direction d'écoulement (109) du fluide (108), comprenant les étapes consistant à

   A) fournir un écoulement du fluide (108),
   B) modifier, à un premier instant, une polarisation magnétique nucléaire ou électromagnétique du fluide (108) à l'emplacement de manipulation (112),
   C) mesurer une densité de flux magnétique d'un champ magnétique émanant du fluide en raison de la polarisation magnétique nucléaire ou électromagnétique en fonction du temps avec un magnétomètre (107) à l'emplacement de détection (113), et
   D) déterminer le temps d'écoulement traversant en tant que différence entre le premier instant et un second instant, la modification de la polarisation magnétique nucléaire ou électromagnétique à l'emplacement de manipulation (112) de l'étape B) au second instant provoquant une modification de la densité de flux du champ magnétique émanant du fluide (108) à l'emplacement de détection (113),

   **caractérisé en ce que**,

   avant l'étape B), le procédé comprend l'étape suivante consistant à :
   E) générer une polarisation magnétique nucléaire ou électromagnétique du fluide par écoulement à travers une section de polarisation magnétique (115) avec un champ magnétique de polarisation magnétique, et
   le procédé, à l'étape B), comprenant l'étape consistant à

   irradier un champ électromagnétique dans le fluide à l'emplacement de manipulation (112) au premier instant, et
   le magnétomètre (107) étant agencé dans un blindage magnétique (104), un champ magnétique d'une intensité de champ de 10 μT ou moins étant présent dans le blindage (104) sans le fluide (108).

2. Procédé selon la revendication précédente, la modification de la polarisation magnétique nucléaire ou électromagnétique à l'étape B) comprenant soit un basculement de la polarisation, soit une destruction de la polarisation en irradiant un champ électromagnétique dans le fluide, soit une génération de la polarisation en appliquant un champ magnétique au fluide, soit une destruction de la polarisation en désactivant un champ magnétique, soit une modification de la polarisation en modifiant un champ magnétique.

3. Procédé selon l'une quelconque des revendications précédentes, l'emplacement de manipulation (112) étant espacé de la section de polarisation magnétique (115) d'une section d'espacement (102), sur la section d'espacement (102), de préférence, un champ magnétique agissant sur le fluide de sorte que la polarisation magnétique nucléaire ou électromagnétique soit essentiellement maintenue.

4. Procédé selon l'une quelconque des revendications précédentes, à l'étape B), en modifiant la polarisation magnétique nucléaire ou électromagnétique de la densité d'écoulement détectée à l'étape C) du champ magnétique émanant du fluide, une évolution temporelle librement sélectionnable, de préférence périodique ou quasi-périodique, est conférée.

5. Débitmètre (100) pour détecter un temps d'écoulement traversant nécessaire à un fluide pour s'écouler à travers une section de mesure (111) depuis un emplacement de manipulation (112) jusqu'à un emplacement de détection (113) espacé de l'emplacement de manipulation (112), avec

   une bobine (103) pour générer un champ électromagnétique ou un dispositif de champ magnétique pouvant être commandé (116) pour générer un champ magnétique à l'emplacement de manipulation (112),
   la bobine (103) ou le dispositif de champ magnétique (116) étant agencé(e) et configuré(e) de telle sorte que, pendant le fonctionnement du débitmètre (100), une polarisation magnétique nucléaire ou électronique du fluide à travers le champ électromagnétique ou le champ magnétique à l'emplacement de manipulation (112) puisse être modifiée,
   un magnétomètre (107) à l'emplacement de détection (113),
   le magnétomètre (107) étant configuré et agencé de telle sorte qu'une densité de flux magnétique du champ magnétique émanant du fluide en raison de la polarisation magnétique nucléaire ou électromagnétique puisse être mesurée à l'aide du magnétomètre (107) pendant le fonctionnement du débitmètre (100) en fonction du temps,

la section de mesure (111),

la section de mesure (111) étant configurée et agencée de telle sorte que, pendant le fonctionnement du débitmètre (100), le fluide s'écoule le long de la section de mesure (111) depuis l'emplacement du lieu de manipulation (112) jusqu'au lieu de détection (113), et

un dispositif de commande et d'évaluation (114),

le dispositif de commande et d'évaluation (114) étant relié de manière efficace à la bobine (103) ou au dispositif à champ magnétique (116) à l'emplacement de manipulation (112) de telle sorte que lors du fonctionnement du débitmètre (100), une amplitude ou une fréquence du champ électromagnétique généré par la bobine (103) ou une densité de flux magnétique du champ magnétique généré par le dispositif de champ magnétique (116) puisse être modifiée de manière réglable et commandée par le dispositif de commande et d'évaluation (114),

le dispositif de commande et d'évaluation (114) étant relié de manière efficace au magnétomètre (107) de sorte que lors du fonctionnement du débitmètre (100), le dispositif de commande et d'évaluation (114) reçoive du magnétomètre (107) un signal de mesure représentant la densité de flux magnétique du champ magnétique émanant du fluide en fonction du temps, et

le dispositif de commande et d'évaluation (114) étant configuré de telle sorte que lors du fonctionnement du débitmètre (100), le dispositif de commande et d'évaluation (114) détermine à partir du signal de mesure le temps d'écoulement traversant en tant que différence entre un premier instant et un second instant,

au premier instant, une modification de la polarisation magnétique nucléaire ou électromagnétique du fluide se produisant à l'emplacement de manipulation (112) et

au second instant, la modification de la polarisation magnétique nucléaire ou électromagnétique à l'emplacement de manipulation (112) entraînant une modification de la densité de flux magnétique du champ magnétique émanant du fluide à mesurer à l'aide du magnétomètre (107) à l'emplacement de détection (113),

**caractérisé en ce que**

le débitmètre (100) comprend une section de polarisation magnétique (115) avec un aimant (101) dans une direction d'écoulement du fluide avant l'emplacement de manipulation,

la section de polarisation (115) étant configurée et agencée de telle sorte que, lors du fonctionnement du débitmètre (100), l'aimant (101) provoque une polarisation magnétique nucléaire ou une polarisation magnétique électronique du fluide s'écoulant le long de la section de polarisation magnétique (115), et

le magnétomètre (107) étant agencé dans un blindage magnétique (104), un champ magnétique d'une intensité de champ de 10 μT ou moins étant présent dans le blindage (104) sans le fluide (108).

6. Débitmètre (100) selon la revendication précédente, l'emplacement de manipulation (112) étant espacé de la section de polarisation (115) par une section d'espacement (102), la section d'espacement (102) comprenant un aimant et l'aimant étant configuré et agencé de telle sorte que, lors du fonctionnement du débitmètre (100), un champ magnétique stationnaire agisse sur le fluide le long de la section d'espacement (102) de telle sorte que la polarisation magnétique nucléaire ou électromagnétique du fluide soit essentiellement maintenue.

7. Débitmètre (100) selon la revendication 5 ou 6, le magnétomètre (107) étant un magnétomètre à pompage optique (107).

8. Débitmètre (100) selon l'une quelconque des revendications 5 à 7, le débitmètre (100) comprenant, à l'emplacement de détection (113), une pluralité de magnétomètres (107) avec une orientation différente les uns des autres.

Fig. 1

Fig. 2

Fig. 3

**EP 4 160 159 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2019368906 A1
- WO 2011154176 A1
- RU 2141628 C1
- DE 4125309 A1
- WO 2012034874 A2
- US 2011001474 A1